# EUROPÄISCHE PATENTSCHRIFT

(11) **EP 1 104 179 B1**
(45) Veröffentlichungstag und Bekanntmachung des Hinweises auf die Patenterteilung: **18.04.2007**
(21) Anmeldenummer: 00125178.4
(22) Anmeldetag: 18.11.2000
(51) Int. Cl.: H04N 5/04

(54) **Verfahren und Vorrichtung zur Anpassung der Laufzeitdifferenz von Video- und Audiosignal in einem Fernsehgerät**
Method and device for adapting the propagation time difference of a video and audiosignal in a television apparatus
Procédé et dispositif pour l'adaptation du décalage de propagation des signaux vidéo et audio dans un appareil de télévision

(30) Priorität: 26.11.1999 DE 19956913
(43) Veröffentlichungstag der Anmeldung: 30.05.2001
(73) Patentinhaber: Grundig Multimedia B.V., 1083HJ Amsterdam (NL)
(72) Erfinder: Köchel, Matthias c/o Grundig AG, 90471 Nürnberg (DE); Haake, Werner c/o Grundig AG, 90471 Nürnberg (DE)
(74) Vertreter: Pröll, Jürgen

(56) Entgegenhaltungen:
- EP-A- 0 881 838
- EP-A- 1 067 773
- WO-A-00/05901
- GB-A- 2 273 215
- US-A- 4 703 355
- US-A- 5 467 139
- US-A- 5 668 601
- US-A- 6 018 376

## Beschreibung

Die Erfindung betrifft ein Verfahren und eine Vorrichtung zur Anpassung der Laufzeitdifferenz von Video- und Audiosignal in einem Fernsehgerät gemäß dem Oberbegriff des Anspruches 1 und dem Oberbegriff des Anspruches 10.

Bei heutzutage gängigen Fernsehgeräten ist eine zeitaufwendige Videosignalaufbereitung üblich, um das Fernsehbild scharf und ohne Beeinträchtigungen darzustellen. Bei Schwarzweiss-Empfängem wurden die Laufzeiten der Videosignale wenig beachtet. Geisterbilder, welche von Mehrwegempfang herrührten wurden über Richtantennen kompensiert. Die Laufzeiten von elektrischen Signalen im Fernsehempfänger wurden als vernachlässigbar klein erachtet. Bei Farbfernsehempfängern war dieses Vorgehen allerdings nicht mehr möglich. So wird beispielsweise beim Pal-Empfänger der gesamte Signalinhalt einer Bildzeile um die Dauer einer Periode, d.h. um 64 µs verzögert. Hierzu wird beispielsweise eine Ultraschallverzögerungsleitung verwendet.

Aus DE-A-43 09 650 ist ein Verfahren zum Korrigieren eines übertragungsbedingten Zeitversatzes zwischen einem Hilfssignal und einem getrennt davon übertragen Audiosignal bekannt. Mittels einer steuerbaren Audioverzögerungseinrichtung, welcher eine Information über den Zeitversatz zugeführt wird, wird in Abhängigkeit von dieser Information das Audiosignal verzögert. Im zu übertragenden Videosignal ist ein definierter Bereich für die Übertragung einer bis zu einem Maximalwert aufsummierbaren Zusatzinformation vorgesehen. Jeder Videosignalprozess, der eine signifikante, feste oder variable Laufzeit zwischen seinem Eingang und seinem Ausgang zur Folge hat, stellt eine diesen Laufzeitbeitrag quantifizierende Zusatzinformation bereit. Dem Videoausgangssignal eines Videosignalprozesses wird in dem definierten Bereich die dem Laufzeitbeitrag dieses Prozesses quantifizierende Zusatzinformation so aufgeprägt, daß sie sich dem im Videoeingangssignal vorliegenden Wert hinzuaddiert. An der Signalsenke wird dem definierten Bereich des Videosignals die aufsummierte Zusatzinformation entnommen und hinsichtlich Polarität und Proportionalität so aufbereitet, daß sie die steuerbare Audioverzögerungseinrichtung, deren Stelleingang sie zugeführt wird, auf genau die der aufsummierten Zusatzinformation entsprechende Verzögerungszeit einstellt.

Aus DE-A-197 06 405 ist ein Verfahren zur Anpassung der Laufzeit mehrerer Kanäle je Übertragungsrichtung, die zur Übertragung eines digitalen Signals mit gegebener Struktur zwischen zwei Endgeräten gebündelt sind, bekannt. Hierbei wird das jeweils an einem Endgerät eintreffende Signal auf Fehler geprüft. Es wird über die Kanäle in Richtung auf das andere Endgerät je Kanal Testsignale mit vorgegebener Bitsequenz und vorgegebener Zeitbeziehung zwischen den Kanälen gesendet, wenn das eintreffende digitale Signal in vorgegebener Weise fehlerhaft ist. Auf der anderen Seite des Endgerätes werden die über die Kanäle gesendeten Testsignale erkannt, die Laufzeitunterschiede zwischen den Testsignalen der Kanäle gemessen und in denjenigen Kanälen mit geringerer Laufzeit gegenüber dem Kanal mit längster Laufzeit Verzögerungen entsprechend der gemessenen Laufzeitunterschiede eingefügt und bei erkennen der übertragenen Testsignale werden diese in entgegengesetzter Richtung zurückgesendet.

Aus EP-A1-1 067 773 ist ein Bild- und Tonwiedergabegerät und Verfahren für dessen Betrieb bekannt. Hierbei wird ein Abhängigkeit von dem Ort der Einspeisung des Video- und/oder Audiosignals anhand von Laufzeitdifferenzen, welche in einer Tabelle abgelegt sind, die das Videosignal und das Audiosignal synchronisieren.

Aus WO 00/05901 A1 ist ein System zur Audio und Videosynchronisation bekannt. Hierbei wird ein Videosignal generiert, welches eine erste aktive Bildperiode und eine zweite aktive Bildperiode aufweist. Weiterhin wird ein Audiosignal generiert. Es ist die Laufzeitdifferenz zwischen dem Videosignal und dem Audiotestsignal bekannt, beide Signale werden in die Verarbeitungseinheit eingespeist und die Laufzeitdifferenz zwischen beiden Signalen wird ermittelt. Anhand des Laufzeitunterschiedes wird dann das Audiosignal verzögert um an das Videosignal angepasst zu werden.

Bei heutzutage gängigen Fernsehgeräten ist eine zeitaufwendige Videosignalaufbereitung üblich, um das Fernsehbild scharf und ohne Beeinträchtigungen darzustellen. Diese Verarbeitung führt dazu, daß das Signal eine Zeitverzögerung erfährt. Das Audiosignal hingegen, welches im Verhältnis zum Videosignal nur wenig bearbeitet wird, wird zeitlich geringer verzögert. Daher kommt es zu dem Effekt, daß die Audiowiedergabe und die Bildwiedergabe nicht zeitsynchron erfolgt. Insbesondere bei der Wiedergabe von Filmen oder Interviews ist eine Lippensynchronität der Bildwiedergabe zur Audiowidergabe nicht mehr gegeben.

Aufgabe der Erfindung ist es ein Verfahren und eine Vorrichtung anzugeben, welche die Laufzeitunterschiede bei der Verarbeitung des Audiosignal und des Videosignals ausgleicht und bei der Wiedergabe Synchronität des Audio- und Videosignals gewährleistet.

Diese Aufgabe wird durch die Merkmale des Anspruches 1 und des Anspruches 9 gelöst. Weitere vorteilhafte Eigenschaften der Erfindung ergeben sich aus der Erläuterung eines Ausführungsbeispiels anhand der Figuren.

Es zeigt:
- FIG 1: einen erfindungsgemäßes Fernsehgerät,
- FIG 2: eine Ausgestaltungsform einer erfindungsgemäßen Verzögerungseinheit und
- FIG 3: eine weitere Ausgestaltungsform einer erfindungsgemäßen Verzögerungseinheit.

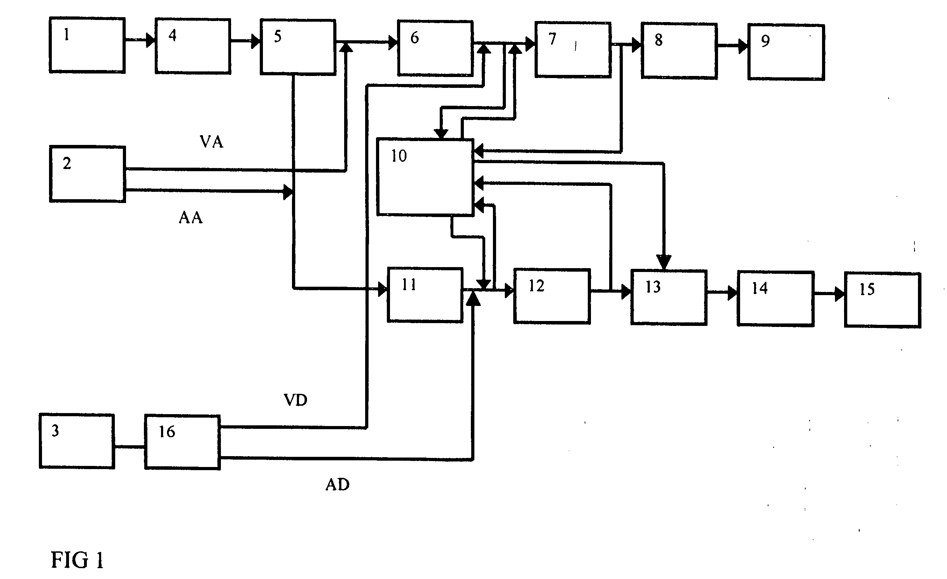

FIG 1 zeigt ein Blockschaltbild eines erfindungsgemäßen Fernsehempfängers. Die Antenneneinheit 1 empfängt ein Fernsehsignal über die angeschlossene Antenne und leitet dieses an die Empfängereinheit 4 weiter. In der Empfängereinheit 4 wird das Fernsehsignal aufbereitet und der Video-Audio-Signal-Abtrennungseinheit 5 zugeleitet. In der Video-Audio-Signal-Abtrennungseinheit 5 wird vom Eingangssignal das Videosignal und das Audiosignal getrennt. Das Audiosignal ist bei heute üblichen Fernsehempfängern ein Stereo-Audiosignal bzw. Mono-Audiosignal. Im Falle eines Stereo-Signals liegen dann zwei Audiokanäle vor. Das Audiosignal wird anschließend über den Analog-Digital-Wandler 11 digitalisiert und einer Audiosignalverarbeitungseinheit 12 zugeführt. Nach der Audiosignalverarbeitung wird das aufbereitete Audiosignal über einen DigitalAnalog-Wandler 14 analogisiert und einer der unterschiedlichen Signalsenken 15 zugeführt. Bei einer dieser Signalsenken 15 handelt es sich beispielsweise um einen Lautsprecher, einen Kopfhörer oder verschiedene Lautsprechergruppen. Bei einfacheren Fernsehgeräten entfällt die Digitalisierung des Audiosignals und das Audiosignal wird direkt einer der Signalsenken 15, ohne Audiosignalaufbereitung zugeführt.

Das Videosignal, welches am Ausgang der Video-Audio-Signal-Abtrennungseinheit 5 vorliegt wird einer Analog-Digital-Wandlereinheit 6 zugeführt und digitalisiert. Das digitalisierte Videosignal wird einer Videosignalverarbeitungseinheit 7 zugeführt. In dieser Videosignalverarbeitungseinheit 7 wird das Videosignal aufbereitet zur Darstellung auf der Videosignalwiedergabeeinheit 9. In Abhängigkeit der vorliegenden Videosignale, wie beispielsweise Pal-Signal, Pal-Plus-Signal, SECAM-Signal, NTSC-Signal, D2-MAC-Signal, HD-MAC-Signal oder HTDV-Signal, wird das Videosignal zur Darstellung auf der Videosignalwiedergabeeinheit 9 aufbereitet. Vor der Anzeile des Videosignals auf der Videosignalwiedergabeeinheit 9 ist dieses jedoch in der Analog- Digital Wandlereinheit 8 in ein analoges Signal zu wandeln, da die Videosignalwiedergabeeinheit 9 ein analoges Medium ist. Die Zeitdauer der Videosignalverarbeiung ist, in Abhängigkeit der Art des Videosignals unterschiedlich lange, jedoch stets zeitintensiver als die Audiosignalaufbereitung. Daher kommt es zu dem Effekt, daß zwischen dem Audiosignal und dem Videosignal bei der Wiedergabe keine Zeitsynchronität besteht. Besonders auffällig ist dies, wenn Personen in einem Film sprechen, es besteht dann keine "Lippensynchronität" des Videosignals zum Audiosignal.

Daher ist eine Mikrocomputereinheit 10 vorgesehen. Diese Mikrocomputereinheit 10 erfaßt die Laufzeit des Audiosignals in der Audiosignalaufbereitungseinheit 12, soweit eine Audiosignalaufbereitungseinheit 12 vorhanden ist und die Laufzeit des Videosignals in der Videosignalaufbereitungseinheit 7. Anschließend errechnet die Mikrocomputereinheit 10 den Laufzeitunterschied beider Signale. Die Mikrocomputereinheit 10 verzögert anschließend das Audiosignal, welches über eine Verzögerungseinheit 13 geleitet wird, über die Verzögerungseinheit 13 um die Laufzeitdifferenz. Nach der Verzögerungseinheit 13 sind das Videosignal und das Audiosignal wieder zeitsynchron. Bei einem Videosignal und dem zugehörigen Audiosignal besteht nunmehr wieder "Lippensynchronität".

Im weiteren weist die Vorrichtung eine Peripherie-Anschlußeinheit 2 auf. Diese Peripherie-Anschlußeinheit 2 ist eine analoge Peripherie-Anschlußeinheit, z.B, ein SCART-Anschluß. Da bei einem SCART-Anschluß die Audio- und Videosignale bereits getrennt dem Fernsehgerät zugeführt werden, wird das Videosignal welches aus der Peripherie-Anschlußeinheit 2 geführt wird, vor der Analog-Digital-Wandlereinheit 6 in den Videosignalweg eingeführt. Das Audiosignal wird vor der der Analog-Digital-Wandlereinheit 11 dem Audiosignalweg zugeführt. Die weitere Verarbeitung erfolgt in bereits beschriebener Weise.

Außerdem weist das Fernsehgerät eine Peripherie-Anschlußeinheit 3 auf. Diese Peripherie-Anschlußeinheit 3 ist eine digitale Peripherie-Anschlußeinheit, z.B., ein IEEE 1394-Anschluß oder ein HAVi-Anschluß. Da bei einem derartigen Anschluß die Audio- und Videosignale in einem digitalen Datenstrom vorliegen muss der Datenstrom in Audio- und Videodaten getrennt werden. Diese Aufgabe wird von der Video-Audio-Signal-Abtrenneinheit 16 durchgeführt. Die Video-Audio-Signal-Abtrenneinheit 16 trennt den digitalen Datenstrom, in oben beschriebener Weise, auf und paßt die Daten auf die Erfordernisse der Videosignalverarbeitungseinheit 7 und der Audiosignalverarbeitungseinheit 12 an. Die digitalen Videodaten werden der Videoverarbeitungseinrichtung 7 und die digitalen Audiodaten der Audiosignalverarbeitungsschaltung 12 zugeführt. Die weitere Verarbeitung erfolgt in bereits beschriebener Weise.

Die Mikrocomputereinheit 10 stanzt in das Videosignal, vor der Videosignalverarbeitungseinheit 7, ein Kennsignal ein und setzt einen Timer. Am Ausgang der Videosignalverarbeitungseinheit 7 überwacht die Mikrocomputereinheit 10 die ausgehenden Videosignale auf das Kennsignal. Erkennt die Mikrocomputereinheit 10 das Kennsignal am Ausgang der Videosignalverarbeitungseinheit 7, so stoppt sie den Timer und ermittelt die Signallaufzeit. Anschließend stanzt sie in das Audiosignal, vor der Audiosignalverarbeitungseinheit 12 ein Kennsignal ein und setzt einen Timer. Am Ausgang der Audiosignalverarbeitungseinheit 12 überwacht die Mikrocomputereinheit 10 die ausgehenden Audiosignale auf das Kennsignal. Erkennt die Mikrocomputereinheit 10 das Kennsignal am Ausgang der Audiosignalverarbeitungseinheit 12, so stoppt sie den Timer und ermittelt diese Signallaufzeit. Die Differenz beider Signallaufzeiten leitet die Mikrocomputereinheit 10 als Steuergröße an die Verzögerungseinheit 13. Die Verzögerungseinheit 13 verzögert nunmehr das Audiosignal um die Zeitdifferenz, so daß das Audiosignal und das Videosignal nach der Videosignalverarbeitungseinheit 7 und der Verzögerungseinheit 13 wieder zeitsynchron sind. Die Zeitdauer der Zeitverzögerung durch die Verzögerungseinheit 13 ist durch die Mikrocomputereinheit 10 frei einstellbar.

In einer vorteilhaften Ausgestaltungsform der Erfindung stanzt die Mikrocomputereinheit 10 das Kennsignal in die Austastlücke des Videosignals.

In anderen Ausgestaltungsform der Erfindung ist der Laufzeitunterschied zwischen den einzelnen Audio- und Videosignalen in Abhängigkeit der Art der Audio- und Videosignale bekannt. Die Laufzeitdifferenzen sind in einer Tabelle abgelegt. Die Mikrocomputereinheit 10 überwacht nunmehr das Videosignal und stellt die Art des Videosignals fest, d.h. ob es sich z.B. um ein Pal-Signal, ein Pal-Plus-Signal, ein SECAM-Signal, ein NTSC-Signal, ein HTDV-Signal, RGB-Signal, ein MPEG-codiertes Signal oder ein IEEE 1394 codiertes Signal handelt. Zugleich überwacht die Mikrocomputereinheit 10 das Audiosignal und stellt die Art des Audiosignals fest, d.h. ob es sich z.B. um ein Mono-Audiosignal, ein Stereo-Audiosignal, ein AC3 codiertes Audiosignal oder ein MPEG-codiertes Audiosignal handelt. Aus der Tabelle entnimmt die Mikrocomputereinheit in Abhängigkeit der Art des Audiosignals und der Art des Videosignals die Laufzeitdifferenz und korrigiert den Zeitversatz zwischen dem Audiosignal und dem Videosignal über die Verzögerungseinheit 13, in oben beschriebener Form.

Die Überwachung bzw. Erfassung und Ermittlung und Korrektur der Laufzeitdifferenz zwischen dem Audiosignal und dem Videosignal erfolgt entweder bei der Inbetriebnahme des Fernsehgerätes und dem erstmaligen Empfang von Signalen nach dem Einschalten des Fernsehgerätes und/oder bei jedem Wechsel der Art des Videosignals und/oder Audiosignals, z.B. nach jedem Programm oder Senderwechsel.

Die Verzögerungseinheit 13 ist in vorteilhafter Ausgestaltungsform als FIFO-Speicher ausgeführt.

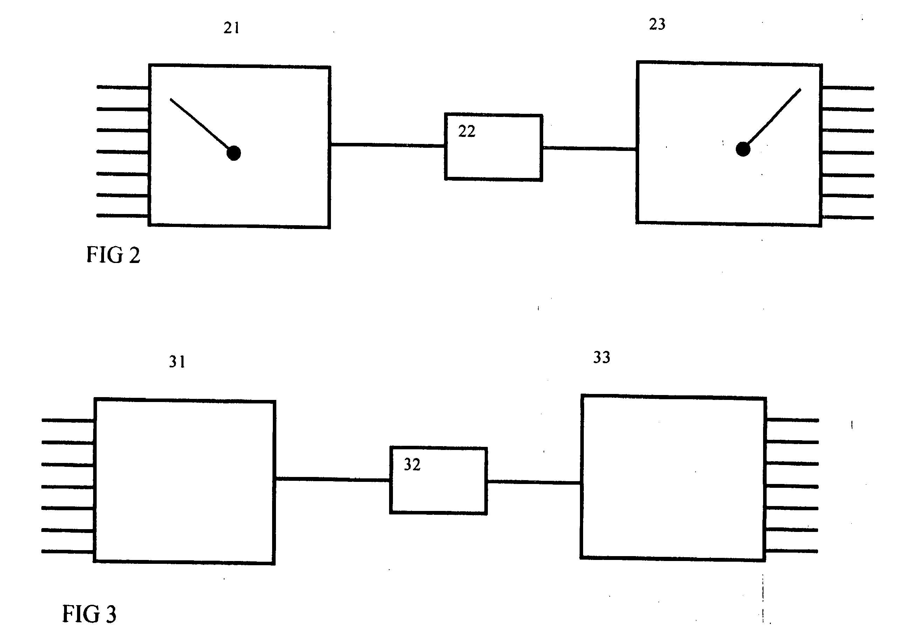

FIG 2 zeigt eine Ausgestaltungsform der Verzögerungseinheit 13. Diese weist einen Auswahlschalter 21, eine Verzögerungseinheit 22, welches eine einstellbare Zeitverzögerung eines Eingangssignals durchführt, und einen zweiten Auswahlschalter 23 auf. Die Verzögerungseinheit 22 wird, in oben beschriebenen Weise, von der Mikrocomputereinheit 10 angesteuert.
Das Audiosignal liegt heutzutage, in Abhängigkeit der Signalquelle oftmals mehrfach vor, z B als Audiosignal in verschiedenen Sprachen, wie z.B. Englisch, Deutsch, Französisch, usw.. Zugleich weisen moderne Fernsehgeräte mehrere Audiosignalsenken, wie etwa Lautsprecher, Kopfhörer, usw. auf. Über die Mikrocomputereinheit 10 kann ein Nutzer über eine Bedienerführung, welche auf der Videosignalwiedergabeeinheit mittels einer OSD-Anzeigeeinheit darstellbar ist, die Signalquelle und die Signalsenke auswählen, welche die Verzögerungseinheit 22 nutzen sollen.

FIG 3 zeigt eine weitere Ausgestaltungsform der Verzögerungseinheit 13. Diese weist einen Multiplexer 31, eine Verzögerungseinheit 32, welche eine einstellbare Zeitverzögerung eines Eingangssignals durchführt, und einen Demultiplexer 33 auf. Die Verzögerungseinheit 32 wird, in oben beschriebenen Weise, von der Mikrocomputereinheit 10 angesteuert. Das Audiosignal liegt oftmals, in Abhängigkeit der Signalquelle, mehrfach vor, z B. als Audiosignal in verschiedenen Sprachen, wie z.B. Englisch, Deutsch, Französisch, usw.. Zugleich weisen moderne Fernsehgeräte mehrere Audiosignalsenken, wie etwa Lautsprecher, Kopfhörer, usw. auf. Alle Audiosignale liegen an dem Multiplexer 31 an. Dieser multiplext die anliegenden Audiosignale und leitet diese an die Verzögerungseinheit 32. Da die Zeitdifferenz der Audiosignale zum Videosignal bei allen an dem Multiplexer 31 anliegenden Audiosignalen gleich ist, wird die Verzögerungseinheit 32 jedes Audiosignal um die gleich Zeit verzögern. Die Einstellung der Zeitverzögerung erfolgt, in oben bereits beschriebener Weise, durch die Mikrocomputereinheit 10. Die gemultiplexten Audiosignale werden durch die Verzögerungseinheit 32 um die eingestellte Zeitdifferenz verzögert und anschließend von dem Demultiplexer 33 wieder hergestellt, nunmehr zeitverzögert, und an die Signalsenken geleitet. Die Audiosignal und das Videosignal sind anschließend wieder zeitsynchron.

### Bezugszeichenliste

- 1: Antenneneinheit
- 2: erste Peripherie-Anschlußeinheit
- 3: zweite Peripherie-Anschlußeinheit
- 4: Emfängereinheit
- 5: erste Video-Audio-Signal-Abtrennungseinheit
- 6: erste Analog-Digitalwandlereinheit
- 7: Videosignalverarbeitungseinheit
- 8: erste Digital-Analogwandlereinheit
- 9: Videosignalwiedergabeeinheit
- 10: Mikrocomputereinheit
- 11: zweite Analog-Digitalwandlereinheit
- 12: Audiosignalverarbeitungseinheit
- 13: Verzögerungseinheit
- 14: zweite Digital-Analogwandlereinheit
- 15: Audiosignalwiedergabeeinheit
- 16: zweite Video-Audio-Signal-Abtrennungeinheit

- 21, 23: Auswahlschalter
- 22: Verzögerungseinheit

- 31: Multiplexer
- 32: Verzögerungseinheit
- 33: Demultiplexer

- AA: Audiosignal analog
- DA: Audiosignal digital
- VA: Videosignal digital
- VD: Videosignal analog

## Patentansprüche

1. Verfahren zur Anpassung der Laufzeitdifferenz von Video- und Audiosignal in einem Fernsehgerät, wobei ein Fernsehsignal in ein Videosignal und ein Audiosignal aufgeteilt wird, das Audiosignal einer Audiosignalverarbeitungseinheit und das Videosignal einer Videosignalverarbeitungseinheit zugeführt wird,
**dadurch gekennzeichnet, dass**
in das Videosignal vor der Videosignalverarbeitungseinheit und in das Audiosignal vor der Audiosignalverarbeitungseinheit ein Kennsignal eingestanzt wird, die Laufzeit des Kennsignals durch die Audiosignalverarbeitungseinheit und durch die Videosignalverarbeitungseinheit ermittelt wird und anhand der Laufzeitdifferenz beider Kennsignale das Audiosignal nach der Audiosignalverarbeitungseinheit verzögert wird, damit die Wiedergabe des Videosignals und des Audiosignals in der jeweiligen Signalsenke zeitsynchron erfolgt und das Kennsignal in die Austastlücke des Videosignals eingefügt wird.

2. Verfahren zur Anpassung der Laufzeitdifferenz von Video- und Audiosignal in einem Fernsehgerät, wobei ein Fernsehsignal in ein Videosignal und ein Audiosignal aufgeteilt wird, das Audiosignal einer Audiosignalverarbeitungseinheit und das Videosignal einer Videosignalverarbeitungseinheit zugeführt wird,
**dadurch gekennzeichnet, dass**
die Laufzeitdifferenz zwischen dem Audiosignal und dem Videosignal, in Abhängigkeit von der Art des Audiosignals und des Videosignals nach der jeweiligen Verarbeitungseinheit bekannt ist, die Laufzeitdifferenz beider Signale in einer Tabelle abgelegt ist, welche jeweils die Laufzeitdifferenz in Abhängigkeit von der Art des Audiosignales und des Videosignales enthält, die Laufzeitdifferenz aus der Tabelle anhand der Art des Audiosignales und der Art des Videosignales ausgewählt wird und anhand der Laufzeitdifferenz das Audiosignal um diese Laufzeitdiffernz verzögert wird, damit die Wiedergabe des Videosignals und des Audiosignals in der jeweiligen Signalsenke zeitsynchron erfolgt.

3. Verfahren nach einem der Ansprüche 1 oder 2,
**dadurch gekennzeichnet, dass**
die Anpassung der Laufzeit unmittelbar nach einem Wechsel der Art des Videosignals oder des Audiosignals durchgeführt wird.

4. Verfahren nach einem oder mehreren der Ansprüche 1 bis 3,
**dadurch gekennzeichnet, dass**
die Anpassung der Laufzeit beim Einschalten und/oder bei einem Senderwechsel des Fernsehgerätes durchgeführt wird.

5. Verfahren nach einem oder mehreren der Ansprüche 1 bis 4,
**dadurch gekennzeichnet, dass**
das Audiosignal ein analoges oder ein digitales Audiosignal ist.

6. Verfahren nach Anspruch 5,
**dadurch gekennzeichnet, dass**
das Audiosignal ein Mono-Audiosignal, ein Stereo-Audiosignal, ein AC3 codiertes Audiosignal oder ein MPEG-codiertes Audiosignal ist.

7. Verfahren nach einem oder mehreren der Ansprüche 1 bis 4,
**dadurch gekennzeichnet, dass**
das Videosignal ein analoges oder ein digitales Signal ist.

8. Verfahren nach Anspruch 7,
**dadurch gekennzeichnet, dass**
das Videosignal ein Pal-Signal, ein Pal-Plus-Signal, ein SECAM-Signal, ein NTSC-Signal, ein HTDV-Signal, RGB-Signal, ein MPEG-codiertes Signal oder ein IEEE 1394 codiertes Signal ist.

9. Vorrichtung zur Anpassung der Laufzeitdifferenz von Video- und Audiosignal in einem Fernsehgerät mit einer Antenneneinheit (1), einer Emfängereinheit (4), einer ersten Video-Audio-Signal-Abtrennungseinheit (5), einer ersten Analog-Digitalwandlereinheit (6), mindestens einer zweiten Analog-Digitalwandlereinheit (11), einer Mikrocomputereinheit (10), einer Videosignalverarbeitungseinheit (7), einer Audiosignalverarbeitungseinheit (12), einer ersten Digital-Analogwandlereinheit (8), einer zweiten Digital-Analogwandlereinheit (14), einer Videosignalwiedergabeeinheit (9) und mindestens einer Audiosignalwiedergabeeinheit (15) und/oder einer ersten Peripherie-Anschlußeinheit (2) und/oder einer zweiten Peripherie-Anschlußeinheit (3) und einer zweiten Video-Audio-Signal-Abtrennungeinheit (16), wobei
die Mikrocomputereinheit (10) die Signallaufzeit durch die Videosignalverarbeitungseinheit (7) und die Signallaufzeit durch die Audioverabeitungseinheit (12) erfasst und die Laufzeitunterschiede beider Signallaufzeiten errechnet,
die Mikrocomputereinheit (10) die Verzögerungseinheit (13) ansteuert und die Audiosignale nach der Audioverarbeitungseinheit (12) um den Laufzeitunterschied zwischen dem Audiosignals und dem Videosignals verzögert, damit das Videosignal und das Audiosignal zeitsynchron an den Signalsenken (9, 15) anliegt.

10. Vorrichtung nach Anspruch 9,
**dadurch gekennzeichnet, dass**
die Verzögerungseinheit (13) ein FIFO-Speicher ist.

11. Vorrichtung nach Anspruch 9 oder 10,
**dadurch gekennzeichnet, dass**
die Verzögerungseinheit (13) aus einem Multiplexer (31) einer Zeitverzögerungseinheit (32) und einem Demultiplexer (33) besteht wodurch mehrere Audiosignale parallel verzögerbar sind.

12. Vorrichtung nach Anspruch 9 oder 10,
**dadurch gekennzeichnet, dass**
die Verzögerungseinheit (13) aus einem ersten Auswahlschalter (21), einem zweiten Auswahlschaler (23) und einer Zeitverzögerungseinheit (22) besteht, die Zeitverzögerungseinheit (22) zwischen dem ersten Auswahlschalter (21) und dem zweiten Auswahlschalter (23) angeschlossen ist und
über den ersten Auswahlschalter (21) einen Audiosignal und über den zweiten Auswahlschalter (23) eine Signalsenke wählbar ist.

## Claims

1. Method of matching the difference in the transit times of video and audio signals in a television set, wherein a television signal is split into a video signal and an audio signal, the audio signal is fed to an audio-signal processing unit and the video signal is fed to a video-signal processing unit, **characterized in that** a marker signal is inserted into the video signal upstream of the video-signal processing unit and into the audio signal upstream of the audio-signal processing unit, the transit time of the marker signal is determined by the audio-signal processing unit and by the video-signal processing unit and, with the aid of the difference in the transit times of the two marker signals, the audio signal is delayed downstream of the audio-signal processing unit in order that the video signal and the audio signal are reproduced in time synchronism in the respective signal sink and the marker signal is inserted into the blanking interval of the video signal.

2. Method of matching the difference in the transit times of video and audio signals in a television set, wherein a television signal is split into a video signal and an audio signal, the audio signal is fed to an audio-signal processing unit and the video signal is fed to a video-signal processing unit, **characterized in that** the difference in the transit times between the audio signal and the video signal, depending on the nature of the audio signal and of the video signal, is known downstream of the respective processing unit, the difference in the transit times of the two signals is stored in a table that contains the difference in the transit times depending on the nature of the audio signal and of the video signal, the difference in the transit times is selected from the table on the basis of the nature of the audio signal and of the nature of the video signal and, with the aid of the difference in the transit times, the audio signal is delayed by said difference in the transit times in order that the video signal and the audio signal are reproduced in time synchronism in the respective signal sink.

3. Method according to either of Claims 1 or 2, **characterized in that** the matching of the transit time is performed immediately after a change in the nature of the video signal or of the audio signal.

4. Method according to one or more of Claims 1 to 3, **characterized in that** the matching of the transit time is performed during switching-on and/or during a transmitter change of the television set.

5. Method according to one or more of Claims 1 to 4, **characterized in that** the audio signal is an analog or a digital audio signal.

6. Method according to Claim 5, **characterized in that** the audio signal is a mono audio signal, a stereo audio signal, an AC3-coded audio signal or an MPEG-coded audio signal.

7. Method according to one or more of Claims 1 to 4, **characterized in that** the video signal is an analog or a digital signal.

8. Method according to Claim 7, **characterized in that** the video signal is a PAL signal, a PALplus signal, a SECAM signal, an NTSC signal, an HDTV signal, an RGB signal, an MPEG-coded signal or an IEEE 1394-coded signal.

9. Device for matching the difference in the transit times of video and audio signals in a television set having an antenna unit (1), a receiving unit (4), a first video-audio signal splitting unit (5), a first analog/digital converter unit (6), at least a second analog/digital converter unit (11), a microcomputer unit (10), a video-signal processing unit (7), an audio-signal processing unit,(12), a first digital/analog converter unit (8), a second digital/analog converter unit (14), a video-signal reproduction unit (9) and at least one audio-signal reproduction unit (15) and/or a first peripheral attachment interface (2) and/or a second peripheral attachment interface (3) and a second video-audio signal splitting unit (16), wherein
the microcomputer unit (10) determines the signal transit time through the video-signal processing unit (7) and the signal transit time through the audio-signal processing unit (12) and calculates the difference in the transit times of the two signal transit times,
the microcomputer unit (10) activates the delay unit (13) and delays the audio signals downstream of the audio-signal processing unit (12) by the difference in the transit times between the audio signal and the video signal in order that the video signal and the audio signal are applied in time synchronism to the signal sinks (9, 15).

10. Device according to Claim 9, **characterized in that** the delay unit (13) is an FIFO memory.

11. Device according to Claim 9 or 10, **characterized in that** the delay unit (13) comprises a multiplexer (31), a time-delay unit (32) and a demultiplexer (33) by which a plurality of audio signals can be delayed in parallel.

12. Device according to Claim 9 or 10, **characterized in that** the delay unit (13) comprises a first selection switch (21), a second selection switch (23) and a time-delay unit (22), the time-delay unit (22) is connected between the first selection switch (21) and the second selection switch (23) and
an audio signal can be selected by means of the first selection switch (21) and a signal sink can be selected by means of the second selection switch (23).

## Revendications

1. Procédé pour l'adaptation de la différence de temps de propagation de signaux audio et vidéo dans un appareil de télévision, dans lequel un signal de télévision est séparé en un signal vidéo et en un signal audio, le signal audio est délivré à une unité de traitement de signaux audio et le signal vidéo est délivré à une unité de traitement de signaux vidéo,
**caractérisé en ce que**
dans le signal vidéo, avant l'unité de traitement de signaux vidéo et dans le signal audio avant l'unité de traitement de signaux audio, un signal d'identification est imprimé, le temps de propagation du signal d'identification est recherché par l'unité de traitement de signaux audio et par l'unité de traitement de signaux vidéo et en regard de la différence de temps de propagation des deux signaux d'identification, le signal audio est retardé après l'unité de traitement de signaux audio, afin que la reproduction du signal vidéo et du signal audio soit effectuée de façon synchrone dans les récepteurs de signaux respectifs et le signal d'identification est inséré dans les intervalles de suppression du signal vidéo.

2. Procédé pour l'adaptation de la différence de temps de propagation de signaux audio et vidéo dans un appareil de télévision, dans lequel un signal de télévision est séparé en un signal vidéo et en un signal audio, le signal audio étant délivré à une unité de traitement de signaux audio et le signal vidéo à une unité de traitement de signaux vidéo,
**caractérisé en ce que**
la différence de temps de propagation entre le signal audio et le signal vidéo est connue selon le type de signal audio et de signal vidéo après l'unité de traitement respectif, la différence de temps de propagation des deux signaux étant affichée dans un tableau, qui contient respectivement la différence de temps de propagation selon le type de signal audio et de signal vidéo, la différence de temps de propagation étant sélectionnée à partir du tableau en regard du type de signal audio et du type de signal vidéo, et en regard de la différence de temps de propagation, le signal audio est retardé de cette différence de temps de propagation, afin que la reproduction du signal vidéo et du signal audio soit effectuée de façon synchrone dans les récepteurs de signaux respectifs.

3. Procédé selon l'une des revendications 1 ou 2,
**caractérisé en ce que**
l'adaptation du temps de propagation est réalisée immédiatement après un changement du type de signal vidéo ou de signal audio.

4. Procédé selon l'une ou plusieurs des revendications 1 à 3, **caractérisé en ce que**
l'adaptation du temps de propagation est effectuée lors de la mise en service et/ou lors d'un changement d'émetteur de l'appareil de télévision.

5. Procédé selon l'une ou plusieurs des revendications 1 à 4, **caractérisé en ce que**
le signal audio est un signal audio analogique ou numérique.

6. Procédé selon la revendication 5, **caractérisé en ce que**
le signal audio est un signal audio mono, un signal audio stéréo, un signal audio codé AC3 ou un signal audio codé MPEG.

7. Procédé selon l'une ou plusieurs des revendications 1 à 4, **caractérisé en ce que**
le signal vidéo est un signal analogique ou numérique.

8. Procédé selon la revendication 7, **caractérisé en ce que**
le signal vidéo est un signal Pal, un signal Pal Plus, un signal SECAM, un signal NTSC, un signal HTDV, un signal RGB, un signal codé MPEG ou un signal codé IEEE 1394.

9. Dispositif pour l'adaptation de la différence de temps de propagation de signaux vidéo et audio dans un appareil de télévision comportant une unité d'antenne (1), une unité de réception (4), une première unité de séparation de signaux vidéo-audio (5), une première unité de conversion analogique-numérique (6), au moins une seconde unité de conversion analogique-numérique (11), une unité de micro-ordinateur (10), une unité de traitement de signaux vidéo (7), une unité de traitement de signaux audio (12), une première unité de conversion numérique-analogique (8), une seconde unité de conversion numérique-analogique (14), une unité de reproduction de signaux vidéo (9) et au moins une unité de reproduction de signaux audio (15) et/ou une première unité de connexion périphérique (2) et/ou une seconde unité de connexion périphérique (3) et une seconde unité de séparation de signaux vidéo-audio (16), dans lequel
l'unité de micro-ordinateur (10) détecte le temps de propagation de signal par l'unité de traitement de signaux vidéo (7) et le temps de propagation de signal par l'intermédiaire de l'unité de traitement audio (12) et calcule la différence de temps de propagation des deux différences de temps de propagation des signaux,
l'unité de micro-ordinateur (10) commande l'unité de retard (13) et retarde les signaux audio après l'unité de traitement audio (12) de la différence de temps de propagation entre le signal audio et le signal vidéo, afin que le signal vidéo et le signal audio soient synchronisés dans les récepteurs de signaux (9, 15).

10. Dispositif selon la revendication 9, **caractérisé en ce que**
l'unité de retard (13) est une mémoire FIFO.

11. Dispositif selon la revendication 9 ou 10, **caractérisé en ce que**
l'unité de retard (13) est constituée d'un multiplexeur (31), d'une unité de retard (32) et d'un démultiplexeur (33), moyennant quoi plusieurs signaux audio peuvent être retardés en parallèle.

12. Dispositif selon la revendication 9 ou 10, **caractérisé en ce que**
l'unité de retard (13) est constituée d'un premier commutateur de sélection (21), d'un second commutateur de sélection (23) et d'une unité de retard (22), l'unité de retard (22) étant connectée entre le premier commutateur de sélection (21) et le second commutateur de sélection (23) et
un signal audio peut être choisi par l'intermédiaire du premier commutateur de sélection (21) et un récepteur de signal par l'intermédiaire du second commutateur de sélection (23).
